# EUROPÄISCHE PATENTSCHRIFT

(11) **EP 2 239 157 B1**
(45) Veröffentlichungstag und Bekanntmachung des Hinweises auf die Patenterteilung: **01.05.2013**
(21) Anmeldenummer: 10157153.7
(22) Anmeldetag: 22.03.2010
(51) Int. Cl.: B60G 17/052

(54) **Ventileinrichtung für eine Luftfederungsanlage**
Valve device for a pneumatic suspension assembly
Dispositif à clapet pour une installation de ressort pneumatique

(30) Priorität: 09.04.2009 DE 102009002339
(43) Veröffentlichungstag der Anmeldung: 13.10.2010
(73) Patentinhaber: Haldex Brake Products GmbH, 69123 Heidelberg (DE)
(72) Erfinder: Maltry, Helmut, 69226 Nussloch (DE)
(74) Vertreter: Rehberg Hüppe + Partner

(56) Entgegenhaltungen:
- WO-A-91/06440
- DE-A1-102007 008 156
- DE-A1-102007 008 159

## Beschreibung

### TECHNISCHES GEBIET DER ERFINDUNG

Die vorliegende Erfindung betrifft eine Ventileinrichtung für eine Luftfederungsanlage, die über eine Hebe-Senk-Ventilbaugruppe verfügt. Weiterhin betrifft die Erfindung eine Gruppe von Ventileinrichtungen. Darüber hinaus betrifft die Erfindung einen Sattelanhänger.

### STAND DER TECHNIK

Im Betrieb von Nutzfahrzeugen ist es erforderlich, einen auf einer Luftfederungsanlage abgestützten Aufbau eines Zugfahrzeugs oder Anhängers bedarfsgerecht zu heben und zu senken (was auch lediglich in einer Belüftung und Entlüftung von Luftfederbälgen der Luftfederungsanlage bestehen kann, beispielsweise für ein Konstanthalten eines Niveaus bei sich verändernden Beladungszuständen oder Fahrbedingungen). Hierzu finden einerseits Niveauregelventile Einsatz, die im Fahrbetrieb eine vorgegebene oder von Betriebs- oder Umgebungszuständen abhängige Soll-Niveauhöhe einregeln durch Be- und Entlüftung der Luftfederbälge. Andererseits kann ein Heben und Senken des Aufbaus beispielsweise im Bereich einer Be- und Entladungsrampe erforderlich sein, was automatisiert erfolgen kann unter Einsatz einer Erfassungseinrichtung, welche eine Höhe einer Rampe und damit den Bedarf eines Hebens und Senkens erfasst, oder durch manuelle Be- und Entlüftung durch eine Bedienperson. Für die manuelle Betätigung finden Hebe-Senk-Ventilbaugruppen Einsatz. Diese besitzen eine manuell herbeiführbare Betriebsstellung Senken. In dieser Betriebsstellung werden über die Hebe-Senk-Ventilbaugruppe die Luftfederbälge mindestens einer Achse entlüftet. Darüber hinaus besitzen die Hebe-Senk-Ventilbaugruppen eine manuell herbeiführbare Betriebsstellung Heben. Für Ventileinrichtungen gemäß dem Stand der Technik erfolgt in der Betriebsstellung Heben eine Belüftung der Luftfederbälge aus einer Druckluftquelle. Schließlich besitzen Hebe-Senk-Ventilbaugruppen eine sogenannte "Reset-to-Ride-Funktion", über die mit einem bevorstehenden, einsetzenden oder aufgenommenen Fahrbetrieb automatisch eine Betriebsstellung Fahrt herbeiführbar ist. Die Reset-to-Ride-Funktion dient der Rückführung der Hebe-Senk-Ventilbaugruppe in die Betriebsstellung Fahrt bei einer Fehlbedienung der Bedienperson, die darin besteht, dass ein Betätigungsorgan der Hebe-Senk-Ventilbaugruppe bei bevorstehenden, einsetzendem oder aufgenommenem Fahrbetrieb noch in der Betriebsstellung Heben oder Senken belassen ist. Lediglich in einer Betriebsstellung Fahrt ist aber die erforderliche Niveauregelung gewährleistet.

Aus den gattungsbildenden Patenten DE 41 20 824 C1 sowie DE 42 02 729 C2 ist eine Schaltventileinheit mit Hebe-Senk-Ventilbaugruppe bekannt, bei welcher ein Wählhebel mit Schaltwelle in einer ersten Axialstellung in einer Schwenkebene verschwenkbar ist zwischen den Stellungen Heben, Stop und Senken, wobei über eine Federanordnung eine automatische Rückführung aus den Stellungen Heben bzw. Senken in die mittlere Schwenkstellung Stop erfolgen kann, wenn der Fahrer den Wählhebel in der Stellung Heben oder Senken loslässt. Die Schaltwelle besitzt Steuernocken, über die
- in der Stellung Heben ein Belüftungsventil in seine Durchlassstellung geschaltet wird, wodurch eine Verbindung einer Druckluftquelle mit den Luftfederbälgen erfolgt, sowie
- in der Stellung Senken ein Entlüftungsventil in seine Entlüftungsstellung umschaltet, in der die Luftfederbälge mit einer Entlüftung verbunden werden.

In der Stellung Stop sind das Belüftungsventil und das Entlüftungsventil abgesperrt. Darüber hinaus ist der Wählhebel mit Schaltwelle von der Betriebsstellung Stop axial verschieblich in eine zweite Axialstellung, welche eine Betriebsstellung Fahrt bildet. In der Betriebstellung Fahrt ist eine Verschwenkung der Schaltwelle mit Wählhebel blockiert durch den Eintritt eines Querfortsatzes der Schaltwelle zwischen Anschläge eines Gehäuses. In der Betriebsstellung Fahrt ist über die Hebe-Senk-Ventilbaugruppe ein Druckluftvorrat unter Zwischenschaltung eines Niveauregelventils mit den Luftfederbälgen verbunden, so dass für den Fahrbetrieb eine Niveauregelung erfolgen kann. Für die Gewährleistung der Reset-to-Ride-Funktion besitzt die Schaltwelle eine einen Druckraum begrenzende Steuer- oder Kolbenfläche. Erkennt eine elektronische Steuereinrichtung einen bevorstehenden, einsetzenden oder aufgenommenen Fahrbetrieb, schaltet diese ein Magnetventil um, welches den Druckraum mit der Druckluftquelle verbindet. Die erfolgende Druckbeaufschlagung der Steuerfläche der Schaltwelle führt zu einer automatischen Bewegung von Wählhebel mit Schaltwelle in die mit der Betriebsstellung Fahrt korrelierende Axialstellung. Das Magnetventil ist hierbei lediglich in eine Leitung zwischen Vorratbehälter integriert, während ein der Belüftung der Luftfederbälge dienender Versorgungsanschluss der Hebe-Senk-ventilbaugruppe an dem Magnetventil vorbei mit der Drucklufquelle verbunden ist. Zur Erfassung des bevorstehenden, einsetzenden oder aufgenommenen Fahrbetriebs kann die Steuereinrichtung beispielsweise eine Fahrgeschwindigkeit überwachen und bei Überschreiten eines Schwellwerts der Fahrgeschwindigkeit die Reset-to-Ride-Funktion auslösen. Möglich ist auch, dass eine Ansteuerung auf Grundlage von ohnehin in einer ABS-Anlage vorliegenden Betriebsgrößen erfolgt. Alternativ kann das Signal eines Raddrehzahlsensors, eines Bremslichtschalters, ein Schließen der Zündung, eine Gangwahlerkennung oder Ähnliches zur Erkennung des einsetzenden Fahrbetriebs ausgewertet werden.

DE 198 21 305 A1 beschreibt eine Ventileinrichtung, welche ausschließlich über elektrische Signale gesteuert wird, die entweder automatisiert in einer Steuereinheit erzeugt werden oder über einen Schalter oder Taster, der innerhalb einer Fahrerkabine oder außerhalb derselben angeordnet ist und Stellungen Heben und Senken besitzt. Besondere Regelalgorithmen betreffen den Druckluft- und Regelbedarf bei einer Schiefstellung des Aufbaus oder einer Nickbewegung des Aufbaus bei Bremsvorgängen oder einen Rangierbetrieb, das Anlernen eines Fahrzeugniveaus sowie die Berücksichtigung eines Verspannens des Fahrzeugaufbaus bei einem Bremsbetrieb. Die die Belüftung und Entlüftung durchführenden Ventile der Hebe-Senk-Ventilbaugruppe werden hierbei sowohl für ein Heben und Senken bei manueller Betätigung des Tasters als auch für die Niveauregelung auf Grundlage der automatisierten Ansteuerung durch die Steuereinheit genutzt.

DE 199 13 380 C1 offenbart eine axial verschiebliche Schaltwelle, die Schwenkstellungen Heben, Senken sowie Stop in einer ersten Axialstellung sowie eine Betriebsstellung Fahrt in einer zweiten Axialstellung besitzt. Eine Verriegelung der Schaltwelle in den beiden Axialstellungen erfolgt über axial beabstandete Rastnuten der Schaltwelle, in welche in der verriegelten Stellung eine Rastkugel eingreift, welche unter Zwischenschaltung einer Feder an einem Kolben abgestützt ist. Der Kolben ist nach Maßgabe eines elektrischen Steuersignals und unter Verwendung eines Magnetventils pneumatisch beaufschlagbar.

Beispielsweise aus den Druckschriften DE 10 2006 017 890 und DE 10 2007 005 979 A1 ist es bekannt, für die Hebe-Senk-Ventilbaugruppe über eine Rast- oder Verriegelungseinrichtung eine Rastierung oder Verriegelung in der Betriebsstellung Heben und/oder Senken vorzusehen. Derartige Rast- oder Verriegelungseinrichtungen können über ein Elektromagnetventil, pneumatisch angesteuerten Kolben, einen elektromagnetischen Aktuator, ein Piezoventil, ein beheizbares Bimetall oder einen Elektromotor im Zuge der Reset-to-Ride-Funktion entriegelt werden.

DE 102 31 245 A1 betrifft eine Schaltventilbaugruppe, bei welcher ein Luftfederbalg selektiv über ein elektrisch ansteuerbares Sperrventil sowie ein diesem vorgeschaltetes elektrisch ansteuerbares 3/2-Wege-Ventil be- und entlüftbar ist. Die elektrische Ansteuerung der genannten Ventile erfolgt über eine Steuereinrichtung, welcher
- das Signal eines die Höhe des Fahrzeugaufbaus erfasssenden Sensors,
- das Signal eines manuell betätigbaren Schalters,
- das Signal eines Umgebungssensors, einer Digitalkamera oder eines Ultraschallsensors, der dazu dient, in Verbindung mit einem geeigneten Mustererkennungs-Algorithmus das Vorhandensein einer Laderampe in der unmittelbaren Umgebung des Fahrzeugs zu erfassen,
- das Signal eines Geschwindigkeitssensors, beispielsweise ein Radsensor eines Antiblockiersystems oder das Geschwindigkeitssignal eines Tachographen,
zugeführt wird. Weiterhin ist über die Steuereinheit eine Ansteuerung eines Proportionalventils eines Stoßdämpfers zur Beeinflussung der dynamischen Eigenschaften des Dämpfungssystems möglich.

Weiterer Stand der Technik zu Ventileinrichtungen mit Hebe-Senk-Ventilbaugruppen ist insbesondere aus DE 199 16 040 B4, DE 26 23 235 C3, EP 0 536 124 B1, DE 10 2007 008 156 A1, DE 10 2007 008 159 A1 bekannt.

### AUFGABE DER ERFINDUNG

Der vorliegenden Erfindung liegt die Aufgabe zugrunde, eine Ventileinrichtung für eine Luftfederungsanlage mit einer Hebe-Senk-Ventilbaugruppe vorzuschlagen, welche für unterschiedliche Einbaubedingungen und/oder in unterschiedlichen Typen von Zugfahrzeugen oder Anhängern einsetzbar ist. Weiterhin soll eine Gruppe derartiger Ventileinrichtungen mit einem hohen Anteil von Gleichteilen für unterschiedliche Einbaubedingungen und/oder Typen von Zugfahrzeugen oder Anhängern vorgeschlagen werden. Schließlich soll eine für einen besonderen Sattelanhänger ausgestaltete Ventileinrichtung vorgeschlagen werden.

### LÖSUNG

Die Aufgabe der Erfindung wird erfindungsgemäß mit den Merkmalen des unabhängigen Patentanspruchs 1 gelöst. Weitere Ausgestaltungen einer erfindungsgemäßen Ventileinrichtung ergeben sich entsprechend den abhängigen Patentansprüchen 2 bis 10. Eine weitere Lösung der der Erfindung zugrundeliegenden Aufgabe ist gegeben für eine Gruppe von Ventileinrichtungen gemäß dem Patentanspruch 11. Eine weitere Lösung der der Erfindung zugrundeliegenden Aufgabe stellt ein Sattelanhänger gemäß dem Patentanspruch 12 dar. Eine weitere Ausgestaltung eines erfindungsgemäßen Sattelanhängers ergibt sich entsprechend den Merkmalen des abhängigen Patentanspruchs 13.

### BESCHREIBUNG DER ERFINDUNG

Die vorliegende Erfindung basiert zunächst auf der Beobachtung, dass es auch Zugfahrzeuge oder Anhängefahrzeuge gibt, bei welchen ein manuell herbeigeführtes Heben nicht erforderlich ist. Dies ist insbesondere der Fall, wenn mit dem Abstellen eines Fahrzeugs eine maximale Niveauhöhe eingeregelt wird, die beispielsweise im Bereich einer Rampe allenfalls zu verringern ist durch manuelle Betätigung einer Stellung Senken. Ein anderer derartiger Fall ist gegeben, wenn es sich bei dem Zugfahrzeug oder Anhänger um ein Transportfahrzeug für ein Transportgut wie bspw. eine Flüssigkeit, ein Schüttgut, ein Pulver oder Ähnliches, insbesondere ein Tankfahrzeug oder ein Kippfahrzeug mit einer Mulde, handelt. Soll für das genannte Beispiel eines Tankfahrzeugs aus diesem über eine Entnahmeöffnung das Transportgut, insbesondere die Flüssigkeit oder das Schüttgut, möglichst schnell und/oder vollständig entnommen werden, kann es erforderlich sein, das Tankfahrzeug derart zu kippen, dass sich die Entnahmeöffnung an der tiefsten Stelle befindet. Von noch größerer Bedeutung ist ein derartiges Verkippen eines Tankfahrzeugs für den Fall eines Transportes von Schüttgut in diesem, wo eine Bewegung des Schüttguts in Richtung einer Entnahmeöffnung lediglich entlang eines Schüttkegels erfolgt, so dass eine erhöhte Verkippung des Tankfahrzeugs notwendig ist. Die zuvor erläuterten Anforderungen führen zu einem Bedarf an Ventileinrichtungen für eine Luftfederungsanlage, mittels welchen zwar eine manuell betätigte Entlüftung in einer Stellung Senken gewünscht ist, aber eine Betriebsstellung Heben nicht erforderlich ist, da keine Rampenanpassung erforderlich ist. Andererseits basiert die vorliegende Erfindung auf der Erkenntnis, dass auch für eine derart eingeschränkte manuelle Betätigungsmöglichkeit eine Reset-to-Ride-Funktion zwingend erforderlich ist, da mit einem bevorstehenden, einsetzenden oder aufgenommenen Fahrbetrieb eine Niveauregelung erfolgen muss, die auch für das Rückführen einer Niveauhöhe des Fahrzeuges nach einem manuellen Senken, dem Kippen des Aufbaus und der Entnahme der Flüssigkeit oder des Schüttguts zuständig sein kann. Andererseits kann die Reset-to-Ride-Funktion auch dafür sorgen, dass eine lastabhängige Anpassung des Bremsdrucks erfolgt. Beispielsweise kann einer elektronischen Steuereinheit, insbesondere einer EBS-Steuereinheit, der lastabhängige Balgdruck nach Einregelung der Soll-Niveauhöhe mit einer Ausführung der Reset-to-Ride-Funktion zugeführt werden. Der lastabhängige Balgdruck kann dann zur Ermittlung eines lastabhängigen Bremsdruckes durch einen Regelalgorithmus in dem EBS-Steuergerät berücksichtigt werden. Ebenfalls möglich ist, dass unter Berücksichtigung eines lastabhängigen Balgdruck eine Beeinflussung eines Stoßdämpfers und/oder fahrdynamischer Systeme (z.B. ESP) erfolgt, was bspw. durch Nutzung des lastabhängigen Balgdruckes als pneumatischer Steuerdruck erfolgen kann oder durch Berücksichtigung des lastabhängigen Balgdruckes in einer elektronischen Steuereinheit, die auf die genannten Fahrzeugkomponenten einwirkt.

Während der Fachmann bei den genannten Anforderungen den Weg wählen würde, eine geeignete Ventileinrichtung für eine Luftfederungsanlage für ein Tankfahrzeug oder Ähnliches neu zu konzipieren, basiert die vorliegenden Erfindung auf dem Grundgedanken, eine an sich bekannte, für ein anderes Anforderungsprofil konzipierte Ventileinrichtung zumindest mit einem hohen Gleichanteil an Bauteilen zu nutzen und an das hier vorliegende Anforderungsprofil anzupassen.

Erfindungsgemäß kann grundsätzlich dieselbe Hebe-Senk-Ventilbaugruppe, welche für Fahrzeuge verwendet wird, bei denen ein manuelles Heben und Senken gewünscht ist, eingesetzt werden. Allerdings ist in der Ventileinrichtung ein Ventil vorgesehen, welches zwischen die Druckluftquelle und einen Versorgungsanschluss der Hebe-Senk-Ventilbaugruppe zwischengeschaltet ist. Der Versorgungsanschluss ist in der Betriebsstellung Heben der Hebe-Senk-Ventilbaugruppe mit einem Luftfederbalg verbunden. Vorzugsweise ist der Versorgungsanschluss auch mit einer Komponente zur pneumatischen Herbeiführung der Reset-to-Ride-Funktion verbunden, so dass der Pneumatikdruck für die Reset-to-Ride-Funktion von dem Versorgungsanschluss zur Verfügung gestellt wird.

Auch für den Einsatz der erfindungsgemäßen Ventileinrichtung für ein Tankfahrzeug kann manuell (bei einer Fehlbedienung durch den Benutzer) eine Stellung Heben angewählt werden. Eine Umsetzung einer derartigen Vorgabe durch den Benutzer ist allerdings unterbunden durch das genannte Ventil, welches sich für die manuelle Anwahl der Betriebsstellung Heben in seiner Sperrstellung befindet. Während grundsätzlich für andere Einsatzbedingungen derselben Hebe-Senk-Ventilbaugruppe in der manuell angewählten Betriebsstellung Heben die Hebe-Senk-Ventilbaugruppe eine Belüftung des mindestens einen Luftfederbalges durchführen würde, führt die Sperrung des Ventils dazu, dass eine derartige Belüftung nicht erfolgen kann.

Grundsätzlich wäre eine derartige Vermeidung eines manuellen Hebens auch möglich, wenn für den Einsatz der Ventileinrichtung die Hebe-Senk-Ventilbaugruppe schlichtweg von der Druckluftquelle entkoppelt würde und die Hebe-Senk-Ventilbaugruppe lediglich eine Verbindung des Luftfederbalges mit einer Entlüftung zum Betrieb Senken sowie eine ergänzende Verbindung mit dem Niveauregelventil besitzen würde. Anders gesagt könnte allein das Ziel der Vermeidung eines Hebens des Fahrzeugaufbaus bei fehlerhafter manueller Anwahl der Stellung Heben der Hebe-Senk-Ventilbaugruppe durch Verschließen des Versorgungsanschlusses mit einer Art Stopfen vermieden werden. Allerdings wäre in diesem Fall mangels einer Druckluftversorgung aus der Druckluftquelle eine pneumatisch zumindest unterstützte Gewährleistung einer Reset-to-Ride-Funktion nicht möglich. Erfindungsgemäß kann stattdessen sehr wohl der Anschluss des Versorgungsanschlusses an die Druckluftquelle erfolgen mit der Sperrung durch das Ventil bei manueller Anwahl der Betriebsstellung Heben. Für eine Durchführung der Reset-to-Ride-Funktion wird aber das Ventil in eine Stellung geschaltet, in der durch dieses eine Verbindung der Druckluftquelle mit einer Reset-to-Ride-Komponente, für DE 42 02 729 C2 die Kombination aus Magnetventil mit nachgeschalteter Steuerkammer und Steuerkolben, geschaffen wird, wodurch die Reset-to-Ride-Funktion ausgeführt werden kann. Erfindungsgemäß ist somit neben einem Magnetventil, welches die eigentliche Durchführung der Reset-to-Ride-Funktion steuert, ein weiteres Ventil vorgesehen ist, welches das Anheben des Fahrzeugaufbaus durch manuelle Anwahl der Stellung Heben an der Hebe-Senk-Ventilbaugruppe unterbindet, aber die Druckluftversorgung für die Durchführung der Reset-to-Ride-Funktion im richtigen Moment freigibt.

Somit findet die Erfindung Einsatz in Verbindung mit Ventileinrichtungen für eine erste Gruppe von Fahrzeugen, bei welchen Betriebsstellungen Heben und Senken manuell anwählbar sind mit einer hiermit einhergehenden Be- und Entlüftung von Luftfederbälgen, z. B. für eine Rampenanpassung, während Ventileinrichtungen für eine zweite Gruppe von Fahrzeugen zwar manuell herbeiführbare Betriebsstellungen Heben besitzen, die aber nicht mit einer Umschaltung von Ventilen derart verbunden ist, dass eine Belüftung der Luftfederbälge durch Verbinden derselben mit einer Druckluftquelle erfolgt.

Für einen Einsatz und eine Anpassung der Ventileinrichtungen an unterschiedliche Gruppen von Fahrzeugen der oben angeführten Art gibt es vielfältige Möglichkeiten:
- Möglich ist, dass hinsichtlich der beteiligten Bauelemente die Ventileinrichtungen für beide Gruppen von Fahrzeugen identisch sind. Ist auch ein Anheben des Aufbaus gewünscht, kann das genannte Ventil ständig in seiner Durchlassstellung geschaltet sein, so dass die erfindungsgemäße Blockierung der Belüftung in der Betriebsstellung Heben nicht erfolgt. Hingegen ist für den Einsatz der Ventileinrichtung für die zweite Gruppe von Fahrzeugen das Ventil wirksam und zwischen der Sperrstellung und der Durchlassstellung hin- und herschaltbar. Eine Anpassung der Ventileinrichtung kann beispielsweise durch eine unterschiedliche Ansteuerung durch eine elektronische Steuereinheit erfolgen.
- Ebenfalls möglich ist allerdings, dass das zwischen den mindestens einen Luftfederbalg und die Druckluftquelle zwischengeschaltete Ventil in Ventileinrichtungen für die erste Gruppe von Fahrzeugen nicht vorgesehen ist, während dieses bedarfsgerecht zu der Ventileinrichtung ergänzt wird, wenn die Ventileinrichtung bestimmt ist für einen Einsatz in der zweiten Gruppe von Fahrzeugen.

Durchaus möglich ist, dass das genannte Ventil separat zu der Hebe-Senk-Ventilbaugruppe ausgebildet ist, nämlich dieser vorgeschaltet ist. Für eine weitere erfindungsgemäße Ausgestaltung bilden allerdings die Hebe-Senk-Ventilbaugruppe und das zwischen Druckluftquelle und die Hebe-Senk-Ventilbaugruppe zwischengeschaltete Ventil eine Baueinheit, so dass eine derartige Baueinheit vereinfacht in einer Druckluftanlage eines Fahrzeugs montiert werden kann, ohne dass beispielsweise eine zusätzliche Leitungsverbindung zwischen dem Ventil und der Hebe-Senk-Ventilbaugruppe geschaffen werden muss. Auch kann ein gemeinsames Gehäuse vorgesehen sein, welches die Hebe-Senk-Ventilbaugruppe und das Ventil beinhaltet und schützt.

### Für die Ausgestaltung des Ventils gibt es vielfältige Möglichkeiten:

Für eine erste Ausführungsform ist in der Ventileinrichtung ein Vorsteuerventil vorgesehen, welches über ein elektrisches Steuersignal ansteuerbar ist. Das entsprechend dem elektrischen Steuersignal ausgesteuerte pneumatische Signal des Vorsteuerventils wird dann dem zwischen Druckluftquelle und Hebe-Senk-Ventilbaugruppe zwischengeschalteten Ventil zugeführt und schaltet dieses dann bedarfsgerecht um. Unter Einsatz einer derartigen Vorsteuerung kann ein auf das elektrische Steuersignal reagierender Aktuator des Vorsteuerventils klein und unabhängig von den Verhältnissen an dem eigentlichen Ventil zwischen Druckluftquelle und Hebe-Senk-Ventilbaugruppe dimensioniert werden.

Für eine mögliche alternative Ausgestaltung besitzt das zwischen Druckluftquelle und die Hebe-Senk-Ventilbaugruppe zwischengeschaltete Ventil einen elektromagnetischen Aktuator, der unmittelbar von dem elektrischen Steuersignal umgeschaltet wird. Hierdurch ergibt sich ein vereinfachter Aufbau der Ventileinrichtung mit einer gegenüber einer Vorsteuerung verringerten Zahl der beteiligten Bauelemente.

In weiterer Ausgestaltung der Erfindung ist das zwischen die Druckluftquelle und die Hebe-Senk-Ventilbaugruppe zwischengeschaltete Ventil als 3/2-Wege-Ventil ausgebildet. Derartige Ventile sind als Standard-Bauelemente zu geringen Kosten und mit hoher Zuverlässigkeit verfügbar.

Durchaus möglich ist, dass das 3/2-Wege-Ventil ohne elektrisches Steuersignal oder pneumatisches Steuersignal bei einer Vorsteuerung in seiner Belüftungsstellung ist. In weiterer Ausgestaltung der Erfindung befindet sich allerdings das Drei/Zwei-Wege-Ventil ohne elektrisches Steuersignal in seiner Sperrstellung. Diese Ausgestaltung findet insbesondere dann Einsatz, wenn bei einem Einbruch der elektrischen Leistungsversorgung gewünscht ist, dass keine Druckluftversorgung der Hebe-Senk-Ventilbaugruppe erfolgen soll, also beispielsweise keine Überführung in eine Stellung "Fahrt" über eine Reset-to-Ride-Funktion möglich sein soll.

Während durchaus möglich ist, dass die Hebe-Senk-Ventilbaugruppe neben der manuellen Betätigung durch den Benutzer nach Maßgabe eines pneumatischen Steuersignals umschaltbar ist, kann auch eine unmittelbare elektrische Ansteuerung der Hebe-Senk-Ventilbaugruppe mit einem elektrischen Steuersignal erfolgen, welches insbesondere einer elektrischen Steuereinheit oder einer ABS-Steuereinheit entstammt. In diesem Fall wird das elektrische Steuersignal einem elektromagnetischen Aktuator der Hebe-Senk-Ventilbaugruppe zugeführt. Möglich ist auch, dass über eine Art Taster oder Schalter zunächst ein Wunsch des Benutzers nach einem Heben oder Senken an die Steuereinheit überführt wird, die dann unter Einsatz des elektromagnetischen Aktuators die Hebe-Senk-Ventilbaugruppe umschaltet. In weiterer Ausgestaltung ist es möglich, dass die Stellungen Heben und Senken nicht lediglich manuell vom Benutzer anwählbar sind, sondern auch über eine Steuereinheit, die in diesem Fall unter Einsatz der Stellungen Heben und Senken eine elektronische Niveauregelung durchführt. Bei Erkennen eines zu geringen Niveaus wird von der Steuereinheit über den Aktuator kurzzeitig ein Betrieb Heben angesteuert, während für eine Überhöhung des Niveaus gegenüber einem Soll-Niveaus ein Betrieb Senken angesteuert wird. Demgemäß können, insbesondere im Vergleich zu einer mechanischen Niveauregelung bekannter Art, vergrößerte Steuerungs- und Regelungsmöglichkeiten für die Niveauregelung bestehen, wobei die Steuereinheit eine Vielzahl unterschiedlicher Betriebsparameter für die Niveauregelung berücksichtigen kann, beispielsweise eine Anpassung des Soll-Niveaus an die Geschwindigkeit oder der Umgebung je nach Fahrt in der Stadt oder über Land sowie auf der Autobahn vornehmen, eine Deaktivierung einer Niveauregelung bei Betätigung einer Betriebsbremse oder bei Kurvenfahrt vornehmen, eine Anpassung an die Beladung durchführen und Ähnliches.

Für einen alternativen Vorschlag ist ein Vorsteuerventil über ein elektrisches Steuersignal ansteuerbar. Das pneumatische Steuersignal, welches von dem Vorsteuerventil erzeugt wird, schaltet dann die Hebe-Senk-Ventilbaugruppe um, was einerseits in der Durchführung einer Reset-to-Ride-Funktion bestehen kann und/oder in einer elektrisch vorgesteuerten pneumatischen Umschaltung für ein Heben und Senken zu einer Niveauregelung bestehen kann.

In weiterer Ausgestaltung der erfindungsgemäßen Ventileinrichtung ist in dieser eine elektrische Steuereinrichtung vorgesehen, die mindestens ein elektrisches Steuersignal erzeugt, über welches eine Ansteuerung der Hebe-Senk-Ventilbaugruppe und/oder des zwischen Druckluftquelle und Hebe-Senk-Ventilbaugruppe zwischengeschalteten Ventils erfolgt. Hierbei kann es sich um eine unmittelbare Ansteuerung unter Einsatz eines elektrischen oder elektromagnetischen Aktuators handeln. Ebenfalls möglich ist eine mittelbare Ansteuerung, beispielsweise über eine elektrische Vorsteuerung eines pneumatischen Steuersignals.

Möglich ist, dass die vorgenannte Steuereinheit ausschließlich der Ansteuerung der Hebe-Senk-Ventilbaugruppe und/oder des Ventils dient. Eine besonders kompakte erfindungsgemäße Ventileinrichtung ergibt wich, wenn die elektronische Steuereinrichtung in eine Brems-Steuereinrichtung integriert ist, so dass die Brems-Steuereinrichtung multifunktional ist. Darüber hinaus kann ausgenutzt werden, dass unter Umständen in der Brems-Steuereinrichtung bereits Signale oder Betriebsgrößen vorhanden sind, die genutzt werden können, um für die Durchführung der Reset-to-Ride-Funktion einen bevorstehenden, einsetzenden oder aufgenommenen Fahrbetrieb zu ermitteln. Ebenfalls möglich ist der Einsatz mehrerer separater Steuereinheiten zu den genannten Zwecken, wobei die Steuereinheiten über ein Bussystem miteinander kommunizieren können.

Gemäß einer weiteren Lösung der der Erfindung zugrundeliegenden Aufgabe findet eine Gruppe von Ventileinrichtung Einsatz, die beispielsweise eine Produktionsreihe von Ventileinrichtungen ist oder eine in einem Lager vorgehaltene oder eine vertriebene Vielzahl von Ventileinrichtungen sein kann. Hierbei ist eine erste Teilgruppe von Ventileinrichtungen vorhanden, bei der die manuell herbeiführbaren Betriebsstellungen Heben und Senken zu einer Be- und Entlüftung des Luftfederbalges führen. Weiterhin ist für die Ventileinrichtungen der ersten Teilgruppe die Reset-to-Ride-Funktion ausführbar. Hingegen ist eine zweite Teilgruppe von Ventileinrichtungen vorgesehen, bei welchen die Hebe-Senk-Ventilbaugruppe derart ausgebildet und/oder angesteuert ist, dass bei einer manuell herbeigeführten Betriebsstellung Heben kein Belüftung der Luftfederbälge erfolgt, so dass zwar ein Schalter oder Wählhebel für die Betriebsstellung Heben vorgesehen ist, bei einer manuellen Anwahl dieser Betriebsstellung allerdings "nichts passiert". Damit kann die Gruppe von Ventileinrichtungen trotz der unterschiedlichen Teilgruppen derselben mit einem hohen Gleichanteil gefertigt werden. Von der Erfindung umfasst sind auch Ausführungsformen mit rein elektrischer Ansteuerung der Betriebsstellungen Heben und Senken über eine Steuereinheit, wobei in diesem Fall für die zweite Gruppe die Steueralgorithmen so angepasst sind, dass bei einer manuellen Vorgabe Heben keine Umschaltung des zugeordneten Belüftungsventils in eine Belüftungsstellung erfolgt.

Während durchaus möglich ist, dass in beiden Teilgruppen das Ventil zwischen Hebe-Senk-Ventilbaugruppe und der Druckluftquelle vorgesehen ist, aber dieses für die zweite Teilgruppe wirkungslos ist, da sich dieses immer in seiner Durchlassstellung befindet, schlägt eine weitere Ausgestaltung der Erfindung vor, für die zweite Teilgruppe das genannten Ventil entfallen zu lassen.

Durchaus möglich ist, dass über die erfindungsgemäße Ventileinrichtung in der Betriebsstellung Senken Luftfederbälge entlüftet werden, die einer einzigen Achse des Zugfahrzeugs oder Anhängers zugeordnet sind oder einer Teilgruppe von Achsen des Zugfahrzeugs oder Anhängers, während der Zustand von mindestens einer weiteren Achse zugeordneten Luftfederbälgen unverändert bleibt, wodurch eine Verkippung des Aufbaus erfolgen kann. Bei einer weiteren Lösung der der Erfindung zugrundeliegenden Aufgabe findet eine Ventileinrichtung der zuvor genannten Art bzw. eine Ventileinrichtung der zweiten Teilgruppe Einsatz für einen Sattelanhänger. Bei diesem erfolgt im vorderen Endbereich des Aufbaus eine Abstützung über eine Sattelplatte und einen Königszapfen. Wird dann über die erfindungsgemäße Ventileinrichtung in der Betriebsstellung Senken eine Entlüftung von mindestens einer hinter der Sattelplatte angeordneten Achse herbeigeführt, kommt es automatisch zu einer Vergrößerung der Neigung des Aufbaus mit damit einhergehender Verschwenkung des Aufbaus, wobei eine Sattelplatte bzw. eine Königszapfen eine Fixpunkt der Verschwenkung bildet und eine Verschwenkung um einer Fahrzeugquerachse erfolgt, die durch diesen Fixpunkt verläuft.

Vorzugsweise ist der Sattelanhänger mit einem Behälter, insbesondere einem Tank oder einer Mulde, ausgebildet und Einrichtungen zum Befüllen und zur Entnahme eines Transportguts wie beispielsweise einer Flüssigkeit oder eines Schüttguts. Hierbei ist vorzugsweise eine Behälteröffnung zur Entnahme des Transportguts am niedrigsten Punkt des Behälters, insbesondere am rückwärtigen Ende des Behälters oder Sattelanhängers, vorgesehen.

Während wie zuvor erwähnt eine Betätigung der Betriebsstellung Senken manuell durch den Benutzer erfolgen kann, beispielsweise gegen Ende der Entnahme einer Flüssigkeit oder eines Schüttguts aus einem Tankfahrzeug oder Kippfahrzeug, ist von der Erfindung ebenfalls umfasst, dass ein Volumen des entnommenen Volumens oder das Restgewicht des Transportguts über eine Erfassungseinrichtung erfasst wird. Für fortschreitende Entnahme eines Transportguts kann dann automatisiert über eine Steuereinrichtung einer Herbeiführung einer Betriebsstellung Senken erfolgen, so dass dann sukzessive mit weiterer Entnahme oder in einer oder mehreren Stufen gegen Ende des Entnahmevorgangs ein Kippen des Sattelanhängers erfolgt.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

### KURZBESCHREIBUNG DER FIGUREN

Im Folgenden wird die Erfindung anhand in den Figuren dargestellter bevorzugter Ausführungsbeispiele weiter erläutert und beschrieben.

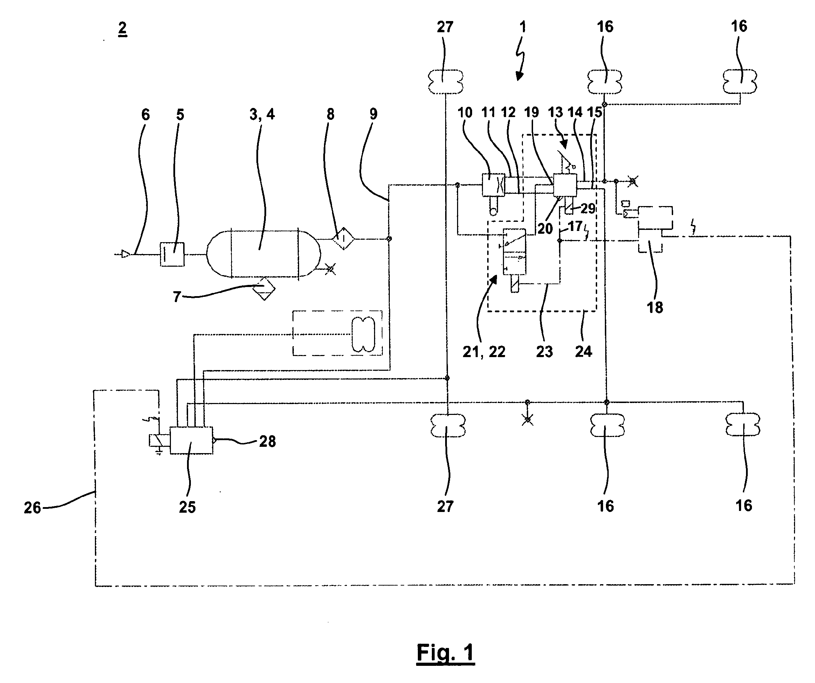

- **Fig. 1**: zeigt in schematischer Darstellung eine Druckluftanlage mit einer erfindungsgemäßen Ventileinrichtung für eine Luftfederungsanlage.

### FIGURENBESCHREIBUNG

**Fig. 1** zeigt eine Druckluftanlage 1 für ein Fahrzeug 2, bei welchem es sich um ein Zugfahrzeug, einen Anhänger oder einen Sattelanhänger handeln kann. Insbesondere ist das Fahrzeug 2 als Tank-Sattelauflieger ausgebildet.

In der Druckluftanlage 1 erfolgt eine Befüllung einer Druckluftquelle 3, hier eines Behälters 4, über ein Rückschlagventil 5 oder ein Drucksicherungsventil aus einer Versorgungsleitung 6, bei welcher es sich um eine Vorratsleitung eines Anhängers handeln kann oder eine mit dem Ausgang eines Kompressors verbundene Leitung. Der Behälter 4 besitzt eine Drainageeinheit 7, um etwaige in dem Behälter 4 gesammelte Feuchtigkeit zu sammeln und zu gegebenen Zeiten in die Umgebung abzuführen.

An den Behälter 4 ist unter Zwischenschaltung eines Filters 8 eine Zentralleitung 9 angeschlossen. Die Zentralleitung 9 versorgt eingangsseitig ein Niveauregelventil 10. Das Niveauregelventil 10 besitzt mindestens zwei Anschlüsse, die jeweils einem Luftfederkreis der zweikreisig ausgebildeten Luftfederung zugeordnet sind und über die Leitungen 11, 12 mit einer Hebe-Senk-Ventilbaugruppe 13 verbunden sind. Ebenfalls möglich ist ein Einsatz in abgewandelter Ausbildung in Verbindung mit einer einkreisigen Luftfederungsanlage.

Das Niveauregelventil 10 besitzt eine Belüftungsstellung, in welcher eine pneumatische Verbindung zwischen der Zentralleitung 9 und den Leitungen 11, 12 geschaffen ist, sowie eine Entlüftungsstellung, in welcher die Leitungen 11, 12 über das Niveauregelventil 10 entlüftet sind, sowie eine Sperrstellung, in der die Leitungen 11, 12 gegenüber der Zentralleitung 9 und der Entlüftung abgesperrt sind. In dem Niveauregelventil 10 kann permanent oder in einer Stellung eine Verbindung der beiden Luftfederkreise erfolgen, insbesondere unter Zwischenschaltung einer in das Niveauregelventil 10 integrierten Drossel. Wie dargestellt kann das Niveauregelventil 10 mechanisch zwischen seinen Betriebsstellungen umgeschaltet werden, indem dieses beispielsweise am Fahrzeugaufbau befestigt ist und mechanisch mit einer Achse derart gekoppelt ist, dass eine Relativverschiebung zwischen Achse und Aufbau zu einer Umschaltung des Niveauregelventils 10 führt. Ebenfalls möglich ist eine pneumatisch Ansteuerung des Niveauregelventils, wobei der pneumatische Steuerdruck in diesem Fall mit einem mechanisch betätigten Vorsteuerventil erzeugt werden kann oder entsprechend einem elektrisch angesteuerten Magnetventil, welches in Abhängigkeit von einer Abweichung eines Ist-Niveaus von einem Soll-Niveau von einer Steuereinheit angesteuert wird. Schließlich ist möglich, dass eine unmittelbare elektrische Ansteuerung des Niveauregelventils 10 durch eine Steuereinheit erfolgt, wenn das Niveauregelventil 10 über einen geeigneten elektrischen Aktuator verfügt.

Die Hebe-Senk-Ventilbaugruppe 13 kann beliebig ausgebildet sein, beispielsweise entsprechend dem eingangs genannten Stand der Technik. An die Hebe-Senk-Ventilbaugruppe 13 sind jeweils einer Fahrzeugseite zugeordnete Luftfederbalgleitungen 14, 15 angeschlossen, die für das dargestellte Ausführungsbeispiel jeweils mit zwei Luftfederbälgen 16 einer Fahrzeugseite verbunden sind.

Ein Versorgungsanschluss 19 ist in der Hebe-Senk-Ventilbaugruppe 13 einerseits in der Stellung Heben mit den Luftfederbalgleitungen 14, 15 verbunden. Andererseits speist der Versorgungsanschluss 19 eine Reset-to-Ride-Komponente, welche mit einem Magnetventil 29 gebildet ist. Für die Durchführung einer Reset-to-Ride-Funktion wird das Magnetventil 29 in eine Durchlassstellung gesteuert, in welcher ein dem Versorgungsanschluss 19 entstammender Druck zu einer Steuerkammer durchgeschaltet wird, in welcher dieser dann einen Steuerkolben in die Stellung Fahrt verschiebt (vgl. den eingangs genannten Stand der Technik DE 42 02 729 C2, wobei in Fig. 1 das Magnetventil abweichend in die Hebe-Senk-Ventilbaugruppe integriert ist). Während gemäß Figur 1 der Versorgungsanschluss 19 in dem Hebe-Senk-Ventilbaugruppe verzweigt einerseits zu den Luftfederbalgleitungen 14, 15 vorgeordneten Ventilen, ist es durchaus denkbar, dass eine derartige Verzweigung stromaufwärts der Hebe-Senk-Ventilbaugruppe 13 angeordnet ist, so dass dann zwei Versorgungsanschlüsse an der Hebe-Senk-Ventilbaugruppe 13 vorgesehen sind, von denen dann einer der Druckluftversorgung für die Reset-to-Ride-Funktion und der andere für die Druckluftversorgung einer Funktion Heben dient.

Für das dargestellte Ausführungsbeispiel ist das Magnetventil 29 unmittelbar über ein elektrisches Signal 17 ansteuerbar, welches einer Steuereinheit 18 entstammt. Für das dargestellte Ausführungsbeispiel ist die Steuereinheit 18 als elektronische Bremssteuereinheit ausgebildet, die auch der Ansteuerung einer Betriebsbremse und der Gewährleistung einer ABS- oder EBS-Betriebsbremsregelung dient. Es versteht sich, dass alternativ zu der dargestellten direkten elektrischen Ansteuerung über das elektrische Signal 17, welches dem Magnetventil 29 der Hebe-Senk-Ventilbaugruppe 13 zugeführt wird, eine elektrische Vorsteuerung eines pneumatischen Steuersignals über ein elektrisches Signal 17 möglich ist, wobei dann der pneumatische Steuerdruck eine pneumatische Betätigung der Hebe-Senk-Ventilbaugruppe 13 ermöglicht.

Die Hebe-Senk-Ventilbaugruppe 13 besitzt folgende Betriebsstellungen:
- In einer Stellung Fahrt erfolgt über die Hebe-Senk-Ventilbaugruppe 13 eine Verbindung der Luftfederbalgleitungen 14, 15 jeweils mit einer zugeordneten Leitung 11, 12 und dem Niveauregelventil 10. In der Betriebsstellung Fahrt kann somit entsprechend der Betriebsstellung des Niveauregelventils 10 eine Niveauregelung erfolgen, indem eine Be- und Entlüftung der Luftfederbälge 16 zur Anpassung des Niveaus an ein Soll-Niveau erfolgt. Gleichzeitig kann der lastabhängige Balgdruck als Stellgröße für den in einem EBS-Gerät vorhandenen Regelalgorithmus für einen lastabhängigen Bremsdruck (ALB-Regelalgorithmus) verwendet werden
- In einer Stellung Stop der Hebe-Senk-Ventilbaugruppe 13 sind die Luftfederbalgleitungen 14, 15 abgesperrt, so dass die Befüllung der Luftfederbälge 16 möglichst unverändert bleibt.
- Für eine hier manuelle Anwahl einer Betriebsstellung Heben des Hebe-Senk-Ventils schaltet die Hebe-Senk-Ventilbaugruppe 13 eine Verbindung zwischen den Luftfederbalgleitungen 14, 15 und den Versorgungsanschluss 19 der Hebe-Senk-Ventilbaugruppe 13 frei, wobei der Versorgungsanschluss 19 in in folgender Weise noch näher beschriebener Form mit dem Behälter 4 verbunden ist. Steht somit am Versorgungsanschluss 19 Druckluft mit einem ausreichenden Druck an, kann über die geschaffene Verbindung zu den Luftfederbalgleitungen 14, 15 eine Befüllung der Luftfederbälge 16 erfolgen.
- Hingegen schafft in einer Betriebsstellung Senken die Hebe-Senk-Ventilbaugruppe 13 eine Verbindung der Luftfederbalgleitungen 14, 15 mit einem Entlüftungsanschluss 20 der Hebe-Senk-Ventilbaugruppe 13, so dass in dieser Betriebsstellung eine Entlüftung der Luftfederbälge 16 erfolgen kann.

Eine konstruktive Ausgestaltung der Hebe-Senk-Ventilbaugruppe 13 kann an sich beliebig erfolgen, beispielsweise entsprechend dem eingangs genannten Stand der Technik. Hierbei kann die Hebe-Senk-Ventilbaugruppe 13 mit einer Schaltwelle mit Wählhebel und zwei Axialstellungen sowie einer Schwenkebene ausgebildet sein, wie dies eingangs bzgl. DE 41 20 824 C1 und DE 42 02 729 C2 beschrieben worden ist. Durchaus denkbar sind aber auch abweichende konstruktive Ausführungsformen mit anderweitig realisierten Betriebsstellungen.

Wie dargestellt ist der Versorgungsanschluss 19 mit der Zentralleitung 9 über ein Ventil 21, hier ein 3/2-Wege-Magnetventil 22, verbunden. Das Ventil 21 besitzt die in Fig. 1 wirksame Sperrstellung, in welcher der Versorgungsanschluss 19 über das Ventil 21 gesperrt ist, sowie die in Fig. 1 nicht wirksame Belüftungsstellung, in welcher der Versorgungsanschluss 19 über das Ventil 21 mit der Zentralleitung 9, und damit mit dem Behälter 4, verbunden ist. Das Ventil 21 ist über ein elektrisches Signal 23 angesteuert, welches der Steuereinheit 18, der EB+-Steuereinheit oder einer separaten Steuereinheit entstammen kann. Vorzugsweise handelt es sich bei dem elektrischen Signal um dasselbe Signal wie das Signal 17, mit welchem das Magnetventil 29 angesteuert wird. Soll erfindungsgemäß eine Belüftung der Luftfederbälge 16 vermieden werden, obwohl infolge einer Fehlbedienung die Hebe-Senk-Ventilbaugruppe 13 manuell in eine Stellung Heben verbracht wurde, wird das Ventil 21 grundsätzlich in seiner Sperrstellung belassen, so dass zwar angesichts der Stellung Heben der Versorgungsanschluss 19 in der Hebe-Senk-Ventilbaugruppe 13 mit den Luftfederbälgen 16 verbunden ist, aber keine Druckluftversorgung des Versorgungsanschlusses 19 erfolgt, da das Ventil 21 in seiner Sperrstellung ist. Soll hingegen die Reset-to-Ride-Funktion ausgeführt werden, wird mit einem einzigen Steuersignal 17, 23 einerseits das Ventil 21 in seine Durchlassstellung verbracht, womit der Versorgungsanschluss 19 mit Druckluft versorgt wird, und andererseits wird die an dem Versorgungsanschluss 19 anstehende Druckluft von dem Magnetventil 29 in seiner herbeigeführten Durchlassstellung durchgeleitet zu der Steuerkammer und dem Steuerkolben, der damit pneumatisch von der Stellung Stop in die Stellung Fahrt überführt wird (vgl. DE 42 02 729 C2). Unter Umständen handelt es sich bei den Steuersignalen 17, 23 lediglich um kurze Steuerimpulse.

Eine Ventileinrichtung 24 kann mit der Hebe-Senk-Ventilbaugruppe 13 sowie dem Ventil 21 gebildet sein, wobei die genannten Bauelemente in der Ventileinrichtung 24 in ein gemeinsames Gehäuse integriert sein können oder als separate Bauelemente, die über elektrische und/oder pneumatische Leitungsverbindungen miteinander verbunden sind, ausgebildet sein können. Es versteht sich, dass ebenfalls das Niveauregelventil 10 in die Ventileinrichtung 24 integriert sein kann oder extern von dieser ausgebildet sein kann und an diese angeschlossen sein kann.

Optional kann die Druckluftanlage 1 mit einer elektrisch angesteuerten Ventileinheit 25 ausgestattet sein, die ebenfalls über die Steuereinheit 18 oder eine separate Steuereinheit über ein elektrisches Signal 26 angesteuert werden kann. Eine Druckluftversorgung der Ventileinheit 25 erfolgt über eine von der Zentralleitung 9 abzweigende Leitungsverbindung. Ausgangsseitig ist die Ventileinheit 25 mit Luftfederbälgen 27 verbunden, die einer Liftachse auf beiden Fahrzeugseiten zugeordnet sind. Somit kann über die Ventileinheit 25 eine Belüftung der Luftfederbälge 27 erfolgen durch Verbindung derselben mit der Zentralleitung 9 sowie eine Entlüftung der Luftfederbälge 27 durch Verbindung derselben mit einem Entlüftungsanschluss 28 der Ventileinheit 25. Weiterhin ist die Ventileinheit 25 mit den Luftfederbälgen 16 von anderen Achsen als der Liftachse verbunden, so dass je nach dem elektrischen Signal 26 über die Ventileinheit 25 einerseits eine gezielte Betätigung der der Liftachse zugeordneten Luftfederbälge 25 erfolgen kann und/oder eine Betätigung der Luftfederbälge 16, beispielsweise um unterschiedlichen Beladungszuständen Rechnung zu tragen.

Bei dem Transport- oder Schüttgut kann es sich beispielsweise um eine Flüssigkeit, pulvrige oder rieselfähige Materialien handeln wie Mehl, Granulate und Ähnliches.

### BEZUGSZEICHENLISTE

- 1: Druckluftanlage
- 2: Fahrzeug
- 3: Druckluftquelle
- 4: Behälter
- 5: Rückschlagventil
- 6: Versorgungsleitung
- 7: Drainageeinheit
- 8: Filter
- 9: Zentralleitung
- 10: Niveauregelventil
- 11: Leitung
- 12: Leitung
- 13: Hebe-Senk-Ventilbaugruppe
- 14: Luftfederbalgleitung
- 15: Luftfederbalgleitung
- 16: Luftfederbalg
- 17: elektrisches Signal
- 18: Steuereinheit
- 19: Versorgungsanschluss
- 20: Entlüftungsanschluss
- 21: Ventil
- 22: 3/2-Wege-Magnetventil
- 23: elektrisches Signal
- 24: Ventileinrichtung
- 25: Ventileinheit
- 26: elektrisches Signal
- 27: Luftfederbalg
- 28: Entlüftungsanschluss
- 29: Magnetventil

## Patentansprüche

1. Ventileinrichtung (24) für eine Luftfederungsanlage
a) mit einer Hebe-Senk-Ventilbaugruppe (13)
aa) mit einer manuell herbeiführbaren Betriebsstellung Senken, in welcher über die Ventileinrichtung (24) mindestens ein Luftfederbalg (16) mindestens einer Achse entlüftet wird,
ab) mit einer manuell herbeiführbaren Betriebsstellung Heben,
ac) mit einer Reset-to-Ride-Funktion, über die mit bevorstehendem, einsetzendem oder aufgenommenem Fahrbetrieb automatisch eine Betriebsstellung Fahrt herbeiführbar ist,
b) wobei eine Druckluftversorgung der Hebe-Senk-Ventilbaugruppe (13) aus einer Druckluftquelle (3) erfolgt,
**dadurch gekennzeichnet, dass**
c) zwischen Druckluftquelle (3) und einem Versorgungsanschluss (19) der Hebe-Senk-Ventilbaugruppe (13), der in der Betriebsstellung Heben mit dem mindestens einen in der Betriebsstellung Senken entlüfteten Luftfederbalg (16) verbunden ist, ein Ventil (21) zwischengeschaltet ist, welches
ca) in der Betriebsstellung Heben in einer Sperrstellung ist, wodurch eine Belüftung des mindestens einen in der Betriebsstellung Senken entlüfteten Luftfederbalgs (16) unterbunden ist, und
cb) mit Ausführung der Reset-to-Ride-Funktion automatisch aus einer Sperrstellung in eine Öffnungsstellung schaltbar ist, womit ein Pneumatikdruck freigegeben wird, welcher der Ausführung der Reset-to-Ride-Funktion dient.

2. Ventileinrichtung (24) nach mindestens einem der vorhergehenden Ansprüche, **dadurch gekennzeichnet, dass** mit der Hebe-Senk-Ventilbaugruppe (13) und dem zwischen Druckluftquelle (3) und Hebe-Senk-Ventilbaugruppe (13) zwischengeschalteten Ventil (21) eine Baueinheit gebildet ist.

3. Ventileinrichtung (24) nach Anspruch 1 oder 2, **dadurch gekennzeichnet, dass** ein Vorsteuerventil über ein elektrisches Steuersignal ansteuerbar ist und das zwischen Druckluftquelle (3) und die Hebe-Senk-Ventilbaugruppe (13) zwischengeschaltete Ventil (21) über ein pneumatisches Steuersignal des Vorsteuerventils umschaltbar ist.

4. Ventileinrichtung (24) nach Anspruch 1 oder 2, **dadurch gekennzeichnet, dass** das zwischen Druckluftquelle (3) und die Hebe-Senk-Ventilbaugruppe (13) zwischengeschaltete Ventil (21) entsprechend einem elektrischen Steuersignal (23) von einem elektromagnetischen Aktuator umschaltbar ist.

5. Ventileinrichtung (24) nach Anspruch 3 oder 4, **dadurch gekennzeichnet, dass** das zwischen Druckluftquelle (3) und die Hebe-Senk-Ventilbaugruppe (13) zwischengeschaltete Ventil (21) als 3/2-Wege-Ventil (22) ausgebildet ist.

6. Ventileinrichtung (24) nach Anspruch 5, **dadurch gekennzeichnet, dass** das 3/2-WegeVentil (22) ohne elektrisches oder pneumatisches Steuersignal in einer Sperrstellung ist.

7. Ventileinrichtung (24) nach einem der vorhergehenden Ansprüche, **dadurch gekennzeichnet, dass** die Hebe-Senk-Ventilbaugruppe (13) entsprechend einem elektrischen Steuersignal (17) von einem elektromagnetischen Aktuator umschaltbar ist.

8. Ventileinrichtung (24) nach einem der Ansprüche 1 bis 6, **dadurch gekennzeichnet, dass** ein Vorsteuerventil über ein elektrisches Steuersignal angesteuert ist und die Hebe-Senk-Ventilbaugruppe (13) über ein pneumatisches Steuersignal des Vorsteuerventils umschaltbar ist.

9. Ventileinrichtung (24) nach einem der vorhergehenden Ansprüche, **dadurch gekennzeichnet, dass** eine elektronische Steuereinrichtung (18) vorgesehen ist, die mindestens ein elektrisches Steuersignal (17; 23) zur mittelbaren oder unmittelbaren Ansteuerung
a) der Hebe-Senk-Ventilbaugruppe (13) und/oder
b) des zwischen Druckluftquelle (3) und Hebe-Senk-Ventilbaugruppe (13) zwischengeschalteten Ventils (21)
erzeugt.

10. Ventileinrichtung (24) nach Anspruch 9, **dadurch gekennzeichnet, dass** die elektronische Steuereinrichtung (18) in eine Brems-Steuereinrichtung integriert ist oder mit dieser kommuniziert.

11. Gruppe von Ventileinrichtungen (24) mit
a) einer ersten Teilgruppe von Ventileinrichtungen (24) mit einer Hebe-Senk-Ventilbaugruppe (13)
aa) mit einer manuell herbeiführbaren Betriebsstellung Senken, in welcher über die Ventileinrichtung (24) mindestens ein Luftfederbalg (16) mindestens einer Achse entlüftet wird,
ab) mit einer manuell herbeiführbaren Betriebsstellung Heben, in welcher über die Ventileinrichtung (24) mindestens ein Luftfederbalg (16) mindestens einer Achse belüftet wird,
ac) mit einer Reset-to-Ride-Funktion, über die mit bevorstehendem, einsetzendem oder aufgenommenem Fahrbetrieb automatisch eine Betriebsstellung Fahrt herbeiführbar ist,
b) einer zweiten Teilgruppe von Ventileinrichtungen (24) nach einem der Ansprüche 1 bis 10 mit einer Hebe-Senk-Ventilbaugruppe (13)
ba) mit einer manuell herbeiführbaren Betriebsstellung Senken, in welcher über die Ventileinrichtung (24) mindestens ein Luftfederbalg (16) mindestens einer Achse entlüftet wird,
bb) mit einer manuell herbeiführbaren Betriebsstellung Heben, in welcher über die Ventileinrichtung (24) eine Belüftung eines Luftfederbalgs (16) mindestens einer Achse nicht erfolgt,
bc) mit einer Reset-to-Ride-Funktion, über die mit bevorstehendem, einsetzendem oder aufgenommenem Fahrbetrieb automatisch eine Betriebsstellung Fahrt herbeiführbar ist,
c) wobei die Hebe-Senk-Ventilbaugruppen (13) der Ventileinrichtungen der zweiten Teilgruppe im Wesentlichen baugleich ausgebildet sind zu den Hebe-Senk-Ventilbaugruppen (13) der Ventileinrichtungen (24) der ersten Teilgruppe,
d) in der ersten Teilgruppe allerdings zwischen die Druckluftquelle (3) und die Hebe-Senk-Ventilbaugruppe (13) kein Ventil (21) zwischengeschaltet ist, welches in der Betriebsstellung Heben in einer Sperrstellung ist, wodurch eine Belüftung des mindestens einen in der Betriebsstellung Senken entlüfteten Luftfederbalgs (16) unterbunden ist, und mit Ausführung der Reset-to-Ride-Funktion automatisch aus einer Sperrstellung in eine Öffnungsstellung schaltbar ist.

12. Sattelanhänger, Kippfahrzeug oder Fahrzeug vergleichbarer Bauart mit einer Ventileinrichtung (24) nach einem der Ansprüche 1 bis 10 oder mit einer Ventileinrichtung der zweiten Teilgruppe gemäß Anspruch 11.

13. Sattelanhänger, Kippfahrzeug oder Fahrzeug vergleichbarer Bauart nach Anspruch 12, **dadurch gekennzeichnet, dass** der Sattelanhänger, das Kippfahrzeug oder Fahrzeug ähnlicher Bauart
a) einen Behälter, insbesondere einen Tank oder eine Mulde,
b) und mindestens einer Einrichtung zum Befüllen des Behälters mit einem Transportgut, beispielsweise einer Flüssigkeit oder eines Schüttguts, und/oder zur Entnahme eines Transportguts
besitzt.

## Claims

1. Valve device (24) for an air suspension system
a) with a lifting-lowering-valve-assembly (13)
aa) with a manually actuatable operating state lowering wherein at least one air suspension bellow (16) of at least one axle is deaerated via the valve device (24),
ab) with a manually actuatable operating state lifting,
ac) with a reset-to-ride-function for automatically actuating an operating state drive for an upcoming, initiated or starting drive mode,
b) wherein a supply of pressurised air of the lifting-lowering-valve-assembly (13) is provided from a source (3) of pressurised air,
wherein
c) a valve (21) is located between the source (3) of pressurised air and a supply port (19) of the lifting-lowering-valve-assembly (13) which in the operating state lifting is connected with the at least one air suspension bellow (16) which is deaerated in the operating state lowering,
wherein the valve (21)
ca) is in a blocking state in the operating state lifting for preventing an aeration of the at least one air suspension bellow (16) which is deaerated in the operating state lowering, and
cb) with the execution of the reset-to-ride-function is automatically switched from a blocking state into an open state for providing a pneumatic pressure serving for executing the reset-to-ride-function.

2. Valve device (24) of claim 1, wherein a unit is built with the lifting-lowering-valve-assembly (13) and the valve (21) whch is located between the source (3) of pressurised air and the lifting-lowering-valve-assembly (13).

3. Valve device (24) of claim 1 or 2, wherein a pilot valve is controllable by an electric control signal and the valve (21) located between the source (3) of pressurised air and the lifting-lowering-valve-assembly (13) is switchable by a pneumatic control signal of the pilot valve.

4. Valve device (24) of claim 1 or 2, wherein the valve (21) located between the source (3) of pressurised air and the lifting-lowering-valve-assembly (13) is switchable according to an electric control signal (23) of an electro-magnetic actuator.

5. Valve device (24) of claim 3 or 4, wherein the valve (21) located between the source (3) of pressurised air and the lifting-lowering-valve-assembly (13) is a 3/2-way-valve (22).

6. Valve device (24) of claim 5, wherein the 3/2-way-valve (22) is in its blocking state if an electronic or pneumatic control signal is not present.

7. Valve device (24) of one of claims 1 to 6, wherein the lifting-lowering-valve-assembly (13) is switchable by an electro-magnetic actuator according to an electric control signal (17).

8. Valve device (24) of one of claims 1 to 6, wherein a pilot valve is controlled by an electric control signal and the lifting-lowering-valve-assembly (13) is switchable by a pneumatic control signal of the pilot valve.

9. Valve device (24) of one of claims 1 to 8, wherein an electronic control unit (18) is provided, wherein the electronic control unit (18) provides at least one electric control signal (17; 23) for the direct or indirect control of
a) the lifting-lowering-valve-assembly (13) and/or
b) the valve (21) located between the source (3) of pressurised air and the lifting-lowering-valve-assembly (13).

10. Valve device (24) of claim 9, wherein the electronic control device (18) is integrated in or communicates with a brake control device.

11. Group of valve devices (24) with
a) a first subgroup of valve devices (24) with a lifting-lowering-valve-assembly (13)
aa) with a manually actuatable operating state lowering, wherein at least one air suspension bellow (16) of at least one axle is deaerated via the valve device (24),
ab) with a manually actuatable operating state lifting, wherein at least one air suspension bellow (16) of at least one axle is aerated via the valve device (24),
ac) a reset-to-ride-function for automatically actuating an operating state drive for an upcoming, initiated or starting drive mode,
b) a second subgroup of valve devices (24) of one claims 1 to 10 with a lifting-lowering-valve-assembly (13)
ba) with a manually actuatable operating state lowering, wherein at least one air suspension bellow (16) of at least one axle is deaerated via the valve device (24),
bb) with a manually actuatable operating state lifting, wherein an aeration of an air suspension bellow (16) of at least one axle is via the valve device (24) does not take place,
bc) with a reset-to-ride-function for automatically actuating an operating state drive for an upcoming, initiated or starting drive mode,
c) wherein the lifting-lowering-valve-assemblies (13) of the valve devices of the second subgroup are generally of the same construction as the lifting-lowering-valve-assemblies (13) of the valve devices (24) of the first subgroup,
d) wherein in the first subgroup between the source (3) of pressurised air and the lifting-lowering-valve-assembly (13) there is located no valve (21) which is in the operating state lifting switchable into a blocking state for awoiding the aeration of at least one air suspension bellow (16) which is deaerated in the operating state lowering and which is switchable from a blocking state into an open state for the execution of the reset-to-ride-function automatically.

12. Semi-trailer, tipper or vehicle of comparable construction with a valve device (24) of one of claims 1 to 10 or with a valve device of the second subgroup according to claim 11.

13. Semi-trailer, tipper or vehicle of comparable construction of claim 12, wherein the semi-trailer, tipper or vehicle of comparable construction comprises
a) a container, in particular a tank or body of a trough,
b) and at least one device for filing the container with a goods to be transported, in particular a liquid or a bulk good or lose material, and/or at least one device for removal of the goods to be transported.

## Revendications

1. Système de vannes (24) pour une suspension pneumatique,
a) comportant un module de levage et descente (13)
aa) avec une position de service Descente actionnable manuellement, dans laquelle l'air contenu dans au moins un soufflet (16) de la suspension pneumatique d'au moins un essieu peut être purgé au moyen du système de vannes (24),
ab) avec une position de service Levage actionnable manuellement,
ac) avec une fonction Reset-to-ride, par l'intermédiaire de laquelle une position de service Conduite peut être actionnée automatiquement avec le régime de conduite imminent, à mettre en oeuvre ou mis en oeuvre,
b) le module de levage et descente (13) étant alimenté en
air comprimé à partir d'une source d'air comprimé (3), **caractérisé en ce que**
c) entre la source d'air comprimé (3) et un raccord d'alimentation (19) du module de levage et descente (13) qui, dans la position de service Levage, est relié audit au moins un soufflet (16) de la suspension pneumatique purgé d'air dans la position de service Descente, est intercalée une vanne (21), laquelle
ca) est dans une position de verrouillage dans la position de service Levage, ce qui empêche la purge d'air dudit au moins un soufflet (16) de la suspension pneumatique, purgé d'air dans la position de service Descente, et
cb) peut être commutée automatiquement, sous l'effet de l'actionnement de la fonction Reset-to-ride, dans une position d'ouverture à partir d'une position de verrouillage, ce qui libère une pression pneumatique qui sert à actionner la fonction Reset-to-ride.

2. Système de vannes (24) selon au moins l'une des revendications précédentes, **caractérisé en ce que** le module de levage et descente (13) et la vanne (21), intercalée entre la source d'air comprimé (3) et le module de levage et descente (13), forment une unité.

3. Système de vannes (24) selon la revendication 1 ou 2, **caractérisé en ce qu'**une vanne pilote, actionnable via un signal de commande électrique, et la vanne (21), intercalée entre la source d'air comprimé (3) et le module de levage et descente (13), peut être commutée dans une autre position via un signal de commande pneumatique de la vanne pilote.

4. Système de vannes (24) selon la revendication 1 ou 2, **caractérisé en ce que** la vanne (21), intercalée entre la source d'air comprimé (3) et le module de levage et descente (13), peut être commutée dans une autre position conformément à un signal de commande (23) électrique d'un actionneur électromagnétique.

5. Système de vannes (24) selon la revendication 3 ou 4, **caractérisé en ce que** la vanne (21), intercalée entre la source d'air comprimé (3) et le module de levage et descente (13), est réalisée sous forme de vanne (22) à 3/2 voies.

6. Système de vannes (24) selon la revendication 5, **caractérisé en ce que** la vanne (22) à 3/2 voies est dans une position de verrouillage sans signal de commande électrique ou pneumatique.

7. Système de vannes (24) selon l'une quelconque des revendications précédentes, **caractérisé en ce que** le module de levage et descente (13) peut être commuté dans une autre position conformément à un signal de commande (17) électrique d'un actionneur électromagnétique.

8. Système de vannes (24) selon l'une quelconque des revendications 1 à 6, **caractérisé en ce qu'**une vanne pilote est actionnée via un signal de commande électrique et le module de levage et descente (13) peut être commuté dans une autre position via un signal de commande pneumatique de la vanne pilote.

9. Système de vannes (24) selon l'une quelconque des revendications précédentes, **caractérisé en ce qu'**il est prévu un dispositif de commande (18) électronique délivrant au moins un signal de commande (17 ; 23) électrique pour l'actionnement indirect ou direct
a) du module de levage et descente (13) et/ou
b) de la vanne (21), intercalée entre la source d'air comprimé (3) et le module de levage et descente (13).

10. Système de vannes (24) selon la revendication 9, **caractérisé en ce que** le dispositif de commande (18) électronique est intégré dans un système de commande des freins ou communique avec ce dernier.

11. Groupe de systèmes de vannes (24), comportant
a) un premier sous-groupe de systèmes de vannes (24) comportant un module de levage et descente (13)
aa) avec une position de service Descente actionnable manuellement, dans laquelle l'air contenu dans au moins un soufflet (16) de la suspension pneumatique d'au moins un essieu peut être purgé au moyen du système de vannes (24),
ab) avec une position de service Levage actionnable manuellement, dans laquelle l'air contenu dans au moins un soufflet (16) de la suspension pneumatique d'au moins un essieu peut être purgé au moyen du système de vannes (24),
ac) avec une fonction Reset-to-ride, par l'intermédiaire de laquelle une position de service Conduite peut être actionnée automatiquement avec le régime de conduite imminent, à mettre en oeuvre ou mis en oeuvre,
b) un deuxième sous-groupe de systèmes de vannes (24) selon l'une quelconque des revendications 1 à 10, comportant un module de levage et descente (13)
ba) avec une position de service Descente actionnable manuellement, dans laquelle l'air contenu dans au moins un soufflet (16) de la suspension pneumatique d'au moins un essieu peut être purgé au moyen du système de vannes (24),
bb) avec une position de service Levage actionnable manuellement, dans laquelle l'air contenu dans un soufflet (16) de la suspension pneumatique d'au moins un essieu n'est pas purgé au moyen du système de vannes (24),
bc) avec une fonction Reset-to-ride, par l'intermédiaire de laquelle une position de service Conduite peut être actionnée automatiquement avec le régime de conduite imminent, à mettre en oeuvre ou mis en oeuvre,
c) les modules de levage et descente (13) des systèmes à vannes du deuxième sous-groupe étant réalisées sensiblement de manière identique aux modules de levage et descente (13) des systèmes à vannes (24) du premier sous-groupe,
d) mais dans le premier sous-groupe, il n'y a pas de vanne (21) intercalée entre la source d'air comprimé (3) et le module de levage et descente (13), laquelle est dans une position de verrouillage dans la position de service Levage, ce qui empêche la purge d'air dudit au moins un soufflet (16) de la suspension pneumatique, purgé d'air dans la position de service Descente, et qui, sous l'effet de l'actionnement de la fonction Reset-to-ride, peut être commutée automatiquement dans une position d'ouverture à partir d'une position de verrouillage.

12. Semi-remorque, véhicule à benne basculante ou véhicule de même type, comportant un système de vannes (24) selon l'une quelconque des revendications 1 à 10 ou avec un système de vannes du deuxième sous-groupe selon la revendication 11.

13. Semi-remorque, véhicule à benne basculante ou véhicule de même type selon la revendication 12, **caractérisé en ce que** le semi-remorque, le véhicule à benne basculante ou le véhicule de même type comportent
a) une cuve, en particulier une citerne ou une benne,
b) et au moins un dispositif permettant de remplir la cuve avec un produit à transporter, tel qu'un liquide ou une matière en vrac, et/ou permettant d'extraire un produit à transporter.
